# EUROPEAN PATENT SPECIFICATION

(11) **EP 2 155 012 B1**
(45) Date of publication and mention of the grant of the patent: **12.01.2011**
(21) Application number: 08737616.6
(22) Date of filing: 09.05.2008
(51) Int. Cl.: A45C 5/14, A45C 13/38, B62B 3/00, B62B 5/00

(54) **LUGGAGE OR CART WITH GREATER STABILITY**
GEPÄCK ODER KARREN MIT MEHR STABILITÄT
VALISE OU CHARIOT AVEC UNE STABILITÉ PLUS IMPORTANTE

(30) Priority: 09.05.2007 IT BO20070045 U
(43) Date of publication of application: 24.02.2010
(73) Proprietor: Angelini Design Di Angelini Lamberto & C. SAS, 41056 Savignano sul Panaro (MO) (IT)
(72) Inventor: ANGELINI, Lamberto, I-40122 Bologna (BO) (IT)
(74) Representative: Fiorani, Giuseppe
(86) International application number: PCT/IB2008/001157
(87) International publication number: WO 2008/139306

(56) References cited:
- DE-A1- 3 325 692
- DE-A1- 10 250 713
- US-A- 5 197 578
- US-A- 5 197 579
- US-A- 5 924 533
- US-A- 6 148 971

## Description

The present invention relates to a luggage or cart with greater stability according to the preamble of claim 1. One such luggage or cart is known, e.g., by US 5 197 578 A.

It is known in the art that a load or a general luggage can be more easily handled when it is equipped with wheels or placed on a wheeled structure or cart.

In prior art upright suitcases, the pull handle (usually telescopic), is housed within the back, whereas the wheels may be in number of two, non-pivoting and coaxial and arranged at the ends of the edge between the back and the base, or in number of four pivoting and arranged at the base.

In currently available pivoting wheels, the axis about which they are pivotally mounted to the suitcase is offset from the vertical axis through the ground support of the wheel; such offset allows the wheels to rotate about a vertical axis.

Therefore, the need arises in the art for a suitcase that allows motion in multiple directions, including the longitudinal direction, for reducing encumbrance in the direction of motion (useful, for instance, for passing through the doors of a lift or along the narrow corridors of railway carriages) but in which maneuverability and safe positioning are increased as compared with prior art suitcases.

In view of the prior art as described above, the object of the present invention is to provide a luggage or cart that has the above advantageous characteristics to a greater extent as compared to what is known heretofore.

According to the present invention, this object is achieved by a luggage or cart as defined in claim 1.

The features and advantages of the present invention will appear from the following detailed description of one practical embodiment, which is illustrated without limitation in the annexed drawings, in which:
- Figure 1 is a schematic exploded view of an upright suitcase without wheels;
- Figures 2, 3 and 4 show three variants of a suitcase according to the present invention;
- Figures 5, 6 and 7 show the suitcase of Figure 2 while it is transversely and longitudinally pulled in both directions, respectively;
- Figure 8 shows the suitcase of Figure 2 in its various possible movements;
- Figures 9, 10 and 12 show three examples of a rigid structure or cart with a loading surface which are not according to the present invention;
- Figure 11 shows the rigid structure of Figure 10 in combination with a suitcase without wheels.

A suitcase, designated as 8, and schematically shown for simplicity as a parallelepiped, has a front surface 1, a base surface 2, a shoulder surface 3, a right side 4 and a left side 5, a back 6, a handle 7.

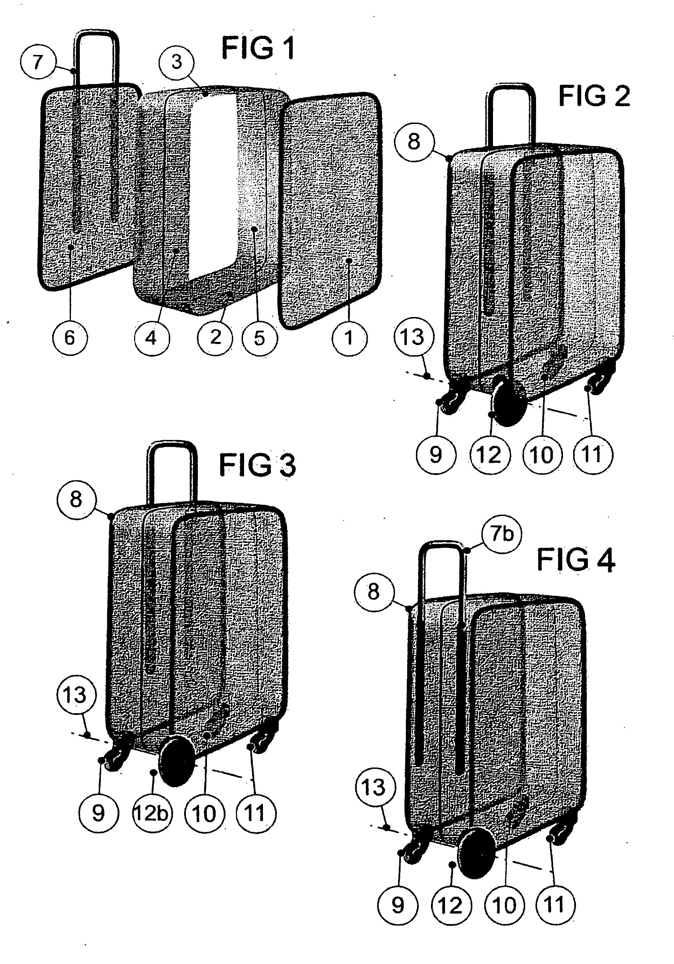

Figure 2 shows a suitcase 8, preferably an upright suitcase (a trolley suitcase or pullman) or a suitcase that has a mainly vertical extension during ordinary use. Three pivoting wheels 9, 10, 11 and one fixed-axis (or non-pivoting) wheel, designated by numeral 12, are attached to one of the surfaces 1, 2, 3, 4, 5, 6 of the suitcase 8, preferably the base 2. For instance, all the wheels or the pivoting wheels 9, 10, 11 only may be pivotally mounted directly to the base 2, whereas the fixed-axis wheel 12 may be also attached directly to the front 1, close to the base 2.

The fixed-axis wheel 12 may be located near an edge of the front 1 and rotates about a rolling axis 13, which is advantageously perpendicular to the plane of the back 6.

As used herein, the term rolling axis is meant to indicate the axis of rotation passing through the center of a pivoting or non-pivoting wheel; such axis is stationary relative to the suitcase in non-pivoting wheels and rotates (about the vertical pivoting axis) in pivoting wheels.

The fixed-axis wheel 12 of the suitcase 8 as shown in Figure 3 is located outside the front 1, so to allow for use of large-diameter wheels for improved maneuverability, while maximizing the internal volume of the suitcase 8.

The handle 7b of the suitcase 8 of Figure 4 is integral with the side 4 instead of being integral with the back 6.

The single fixed-axis wheel 12 is different from the pivoting wheels 9, 10, 11, in that it has a different moment of inertia about the rolling axis 13, for instance , due to a different, e.g. greater, diameter than the one of the other wheels. Advantageously, it may have a rolling axis 13 having a different height from the ground as compared with the rolling axes of the pivoting wheels 9, 10, 11 and/or may be fixed to the base 2 in a non-symmetric point - with respect to at least one or all of the main axes of symmetry of the base 2 - relative to the points in which the other pivoting wheels 9, 10, 11 are mounted.

All the wheels 9, 10, 11, 12 of the surface generally have a common tangent plane which corresponds to the plane whereby the suitcase lies on the floor when it is supported by the wheels 9, 10, 11 and 12. This tangent plane is preferably such that the suitcase 8 may be deemed to be upright when it lies thereupon. For instance, it can be perpendicular to the front 1 and/or the back 2 and/or the sides 4, 5.

Also, the pivoting and rolling axes of the wheels 9, 10, 11 and 12 may be perpendicular or parallel to the above support plane, respectively.

In the embodiment shown in the figures, the fixed-axis wheel 12 has a greater diameter, preferably by at least 30%, for instance by 50% to 80%, with respect to the diameter of the pivoting wheels 9, 10, 11.

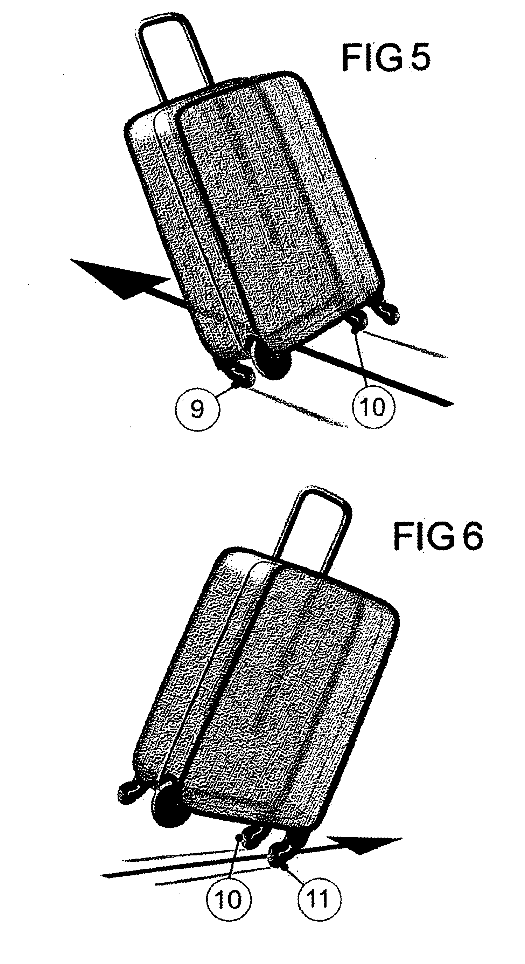

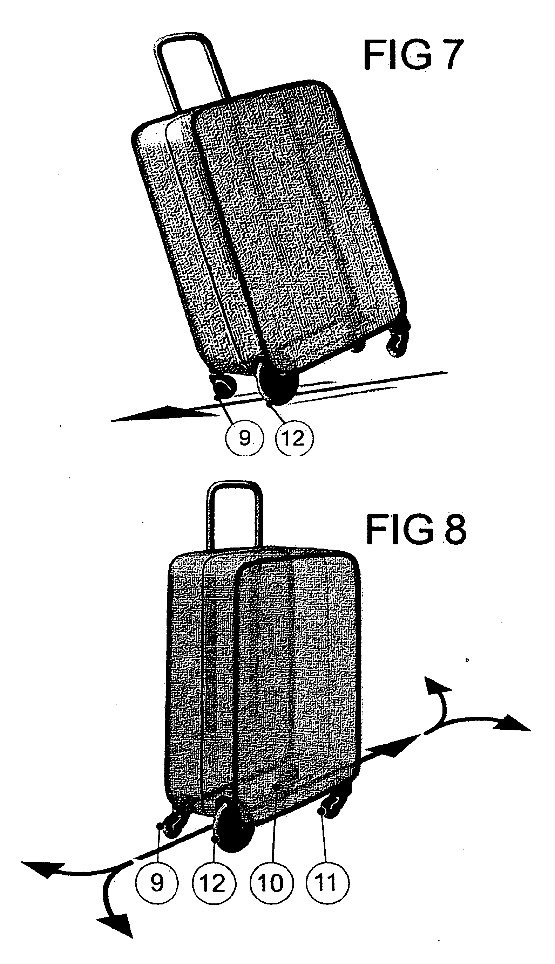

The suitcase 8 of Figure 2 may be pulled parallel to the sides 4, 5, inclined on the wheels 9 and 10 (see Figure 5), parallel to front 1 and back 6 and inclined relative to the two pivoting wheels 10 and 11 (see Figure 6) or parallel to the front 1 and back 6 and inclined on the pivoting wheel 9 and the fixed-axis wheel 12 (see Figure 7).

When the suitcase 8 is in the upright position, having all the wheels lying on the floor (see Figure 8), it can be maneuvered along the path defined by the rolling motion of the fixed-axis wheel and guided by the pivoting wheels 9, 10, 11.

This configuration of the wheels allows the suitcase 8 to be maneuvered in any possible manner, i.e. to be pulled in a transverse direction, inclined on the two pivoting wheels 9, 10 arranged in the proximity of the back 6, to be pulled parallel to the base 1 and the back 6, inclined relative to the pivoting wheels 10, 11 of the side 5 or inclined relative to the pivoting wheel 9 and the fixed-axis wheel of the side 4 and to be moved in an upright position relative to the four wheels 9, 10, 11, 12.

Since the suitcase 8 may lie on the floor by a single fixed-axis wheel 12 and at least three pivoting wheels 9, 10, 11, when it is pushed in an upright position, it moves in a preferred direction, as defined by the rolling direction of the fixed-axis wheel, and is maneuvered in a much easier manner.

Therefore, thanks to the steering ability of the pivoting wheels 9, 10, 11 and the possibility of directing of the fixed-axis wheel 12, it is possible to have a smaller front surface, while maintaining a good directional control due to the distance between the non-pivoting wheel 12 and the pivoting wheels 10, 11 placed on the opposite side.

Furthermore, the suitcase 8 of the present invention is less prone to independent motion, even when it is left on an inclined plane, thanks to the fixed-axis wheel 12. The fixed axis would act as a pivot point for the suitcase, which should then move itself for opposing such motion.

In any case, its very good maneuverability makes very easy to set the suitcase, in a preemptive manner, with the direction defined by the rolling motion of the fixed-axis wheel 12 transversely relative to the main inclination, so that the fixed-axis wheel 12 would act as a brake.

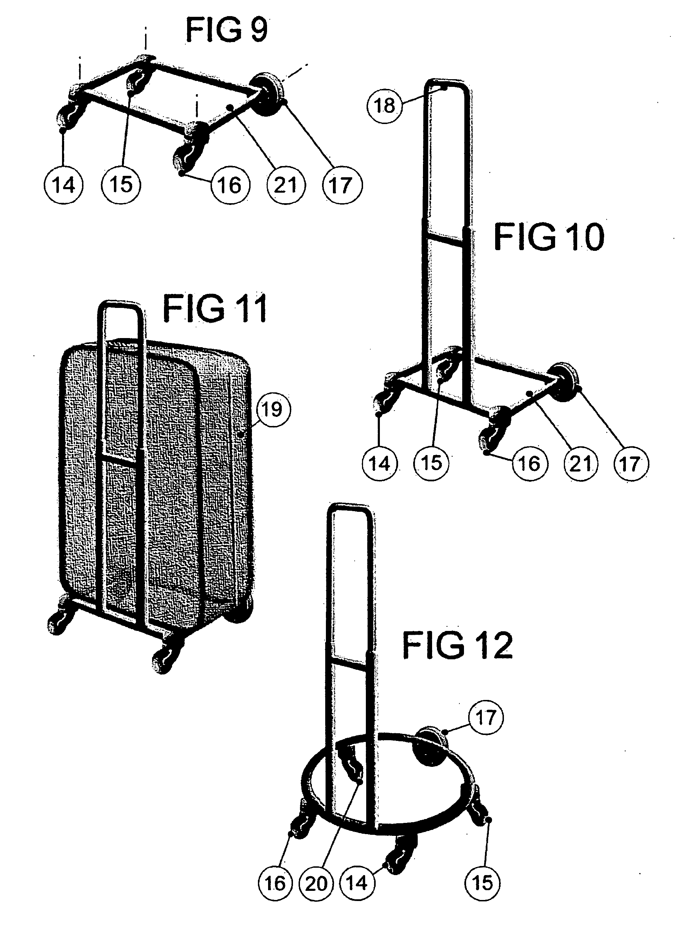

Figure 9 shows a rigid or cart-like structure having a load surface 21, with three wheels 14, 15, 16 pivoting about axes perpendicular to the load surface 21, and a single wheel having an axis fixed and parallel to the load surface 21. This configuration allows guided maneuvering, thanks to the possibility of directing it allowed by the single fixed-axis wheel 17 together with the other pivoting wheels 14, 15, 16 working as steering wheels.

The structure of Figure 9 may have a handle 18 (see Figure 10) and temporarily or permanently support a suitcase or any item of luggage 19 (Figure 11).

The cart of Figure 12 differs from those described above in that it has more pivoting wheels, designated by numerals 14, 15, 16 and 20, anyway always combined with only one fixed-axis wheel 17, which is the only one to be pivotally mounted about a horizontal axis.

In practice, it has been found that the provision of only one fixed-axis wheel 12 of a size other than the other pivoting wheels 9, 10, 11 or 14, 15, 16, 20 imparts surprising stability and resistance to independent motion to the suitcase 8 (or to the load surface 21).

Although the reasons for this have not been well defined yet, it is believed that the different moment of inertia about the rolling axis of the fixed-axis wheel 12 with respect to the ones of the pivoting wheels causes the forces acting on the suitcase 8 (or on the load surface 21) to be non-symmetrical, and to amplify friction in a non-linear manner, thereby ensuring greater stability.

More generally, improved stability has been found to be also obtained by arranging the one fixed-axis wheel 12 without respecting a symmetrical arrangement, in terms of shape, mass distribution and/or points of fixation to the base 2, relative to the other pivoting wheels.

Those skilled in the art will obviously appreciate that a number of changes and variants may be made to the arrangements as described hereinbefore to meet incidental and specific needs.

For instance, the luggage shall not be limited to the suitcase having its largest size in the vertical direction, and the handle shall not necessarily be one, or only as shown and described; also, the teachings of the present disclosure can apply to a structure that is independent from a suitcase, such as a cart, that can be permanently or temporarily coupled to a suitcase.

Also, those of ordinary skill in the art will readily appreciate that the teachings of the invention can also apply to suitcases with more than one fixed-axis wheels, as long as the mutual arrangement of the wheels allows normal use of the suitcase when it lies on a plane including one non-pivoting wheel only.

## Claims

1. A suitcase (8) comprising a base surface (2) that is designed to face towards the ground as it rests thereon, at least four wheels (9, 10, 11, 12) being found at said base surface (2), including at least three pivoting wheels (9, 10, 11) and only one non-pivoting wheel (12), wherein said non-pivoting wheel (12) is different from at least one of said pivoting wheels (9, 10, 11), said at least three pivoting wheels (9, 10, 11) and said only one non-pivoting wheel (12) being all connected to said suitcase (8) substantially proximate to the vertices of said base surface (2), **characterized in that** said non-pivoting wheel (12) differs from at least one of said pivoting wheels (9, 10, 11) in terms of moments of inertia about the rolling axis (13).

2. A suitcase (8) as claimed in the preceding claim, wherein said non-pivoting wheel (12) differs from at least one of said pivoting wheels (9, 10, 11) in terms of diameter.

3. A suitcase (8) as claimed in the preceding claim, wherein the diameter of said non-pivoting wheel (12) is greater than the diameter of at least one of said pivoting wheels (9, 10, 11).

4. A suitcase as claimed in the preceding claim, wherein the diameter of said non-pivoting wheel (12) is at least 40% greater than the diameter of at least one of said pivoting wheels (9, 10, 11).

5. A suitcase (8) as claimed in any one of the preceding claims, wherein said non-pivoting wheel (12) differs from at least one of said pivoting wheels (9, 10, 11), because the point of connection of said non-pivoting wheel (12) cannot be related to the points of connection of the other wheels (9, 10, 11) by a symmetry relationship as compared with one of the main axes of symmetry of said base surface (2).

6. A suitcase (8) as claimed in any one of the preceding claims, wherein all the pivoting wheels (9, 10, 11) are substantially identical.

## Patentansprüche

1. Koffer (8), der eine Grundfläche (2) umfasst, die gestaltet ist, um, wenn er sich auf sie stützt, dem Boden zugewandt zu sein, wobei sich mindestens vier Räder (9, 10, 11, 12) an dieser Grundfläche (2) befinden, die mindestens drei schwenkbare Räder (9, 10, 11) und nur ein nicht schwenkbares Rad (12) umfassen, wobei sich dieses nicht schwenkbare Rad (12) von mindestens einem der schwenkbaren Räder (9, 10, 11) unterscheidet, wobei die mindestens drei schwenkbaren Räder (9, 10, 11) und das nur eine nicht schwenkbare Rad (12) alle im Wesentlichen nahe den Eckpunkten der Grundfläche (2) mit dem Koffer (8) verbunden sind, **dadurch gekennzeichnet, dass** sich das nicht schwenkbare Rad (12) von mindestens einem der schwenkbaren Räder (9, 10, 11) in Bezug auf die Trägheitsmomente um die Drehachse (13) unterscheidet.

2. Koffer (8) nach dem vorherigen Anspruch, bei dem sich das nicht schwenkbare Rad (12) in Bezug auf den Durchmesser von mindestens einem der schwenkbaren Räder (9, 10, 11) unterscheidet.

3. Koffer (8) nach dem vorherigen Anspruch, bei dem der Durchmesser des nicht schwenkbaren Rads (12) größer als der Durchmesser von mindestens einem der schwenkbaren Räder (9, 10, 11) ist.

4. Koffer nach dem vorherigen Anspruch, bei dem der Durchmesser des nicht schwenkbaren Rads (12) um mindestens 40% größer als der Durchmesser von mindestens einem der schwenkbaren Räder (9, 10, 11) ist.

5. Koffer (8) nach einem der vorherigen Ansprüche, bei dem sich das nicht schwenkbare Rad (12) von mindestens einem der schwenkbaren Räder (9, 10, 11) unterscheidet, weil der Anschlusspunkt des nicht schwenkbaren Rads (12) nicht mit den Anschlusspunkten der anderen Räder (9, 10, 11) durch eine Symmetriebeziehung im Vergleich zu einer solchen der Hauptsymmetrieachsen der Grundfläche (2) in Beziehung gesetzt werden kann.

6. Koffer (8) nach einem der vorherigen Ansprüche, bei dem alle schwenkbaren Räder (9, 10, 11) im Wesentlichen gleich sind.

## Revendications

1. Valise (8) comprenant une surface de base (2) qui est conçue pour faire face au sol lorsqu'elle repose sur celui-ci, au moins quatre roues (9, 10, 11,12) étant situées à ladite surface de base (2), comprenant au moins trois roues pivotantes (9, 10, 11) et seulement une roue non pivotante (12), dans laquelle ladite roue non pivotante (12) est différente d'au moins une desdites roues pivotantes (9, 10, 11), lesdites au moins trois roues pivotantes (9, 10, 11) et ladite seulement une roue non pivotante (12) étant toutes connectées à ladite valise (8) sensiblement à proximité des sommets de ladite surface de base (2), **caractérisée en ce que** ladite roue non pivotante (12) diffère de l'au moins une desdites roues pivotantes (9, 10, 11) en termes de moments d'inertie autour de l'axe de roulement (13).

2. Valise (8) selon la revendication précédente, dans laquelle ladite roue non pivotante (12) diffère de l'au moins une desdites roues pivotantes (9, 10, 11) en termes de diamètre.

3. Valise (8) selon la revendication précédente, dans laquelle le diamètre de ladite roue non pivotante (12) est supérieur au diamètre de l'au moins une desdites roues pivotantes (9, 10, 11).

4. Valise (8) selon la revendication précédente, dans laquelle le diamètre de ladite roue non pivotante (12) est supérieur d'au moins 40% au diamètre de l'au moins une desdites roues pivotantes (9, 10, 11).

5. Valise (8) selon l'une quelconque des revendications précédentes, dans laquelle ladite roue non pivotante (12) diffère de l'au moins une desdites roues pivotantes (9, 10, 11) du fait que le point de connexion de ladite roue non pivotante (12) ne peut pas être lié aux points de connexion des autres roues (9, 10, 11) par une relation de symétrie telle que comparée à l'un des axes de symétrie principaux de ladite surface de base (2).

6. Valise (8) selon l'une quelconque des revendications précédentes, dans laquelle toutes les roues pivotantes (9, 10, 11) sont sensiblement identiques.
